# EUROPEAN PATENT APPLICATION

(11) **EP 1 864 785 A1**
(43) Date of publication of application: **12.12.2007**
(21) Application number: 06729400.9
(22) Date of filing: 17.03.2006
(51) Int. Cl.: B29C 67/00

(54) **SETEROLITHOGRAPHY METHOD**

(30) Priority: 30.03.2005 JP 2005099800
(71) Applicant: JSR Corporation, Tokyo 104-8410 (JP)
(72) Inventor: TERAMOTO, Toshio c/o JSR Corporation, Chuo-ku, Tokyo 1048410 (JP); MOROHOSHI, Kimitaka c/o JSR Corporation, Chuo-ku, Tokyo 1048410 (JP)
(74) Representative: TBK-Patent
(86) International application number: PCT/JP2006/305411
(87) International publication number: WO 2006/109425

(57) **Abstract**

A stereolithography method capable of accurately forming a three-dimensional model with a desired shape. In the stereolithography method, liquid photocurable resin is selectively exposed to light to form a cured resin layer and cured resin layers are sequentially laminated to form a three-dimensional model. The light exposure is performed on projection regions with an arbitrary area of, for example, 100 mm² or less, and the position of the regions are changed while the exposure is performed. In the projection regions are overlap regions at the boundaries between adjacent projection regions.

## Description

### Technical Field

The present invention relates to a stereolithography method that forms a cured resin layer by selectively applying light to liquid photocurable resin and laminates cured resin layers on one another to thereby create a stereoscopic model.

### Background Art

A photo-curing stereolithography method (which is referred to hereinafter as a stereolithography method) forms a three-dimensional model based on data of cross-sections that are obtained by slicing a three-dimensional model to be formed into a plurality of layers. Normally, a light ray is firstly applied to the liquid level of liquid photocurable resin in a region corresponding to the lowermost cross-section. The light-exposed part of the liquid level of the liquid photocurable resin is thereby cured, so that a cured resin layer in one cross-section of a three-dimensional model is formed. Then, liquid photocurable resin that is not cured yet is coated at a given thickness on the surface of the cured resin layer. In this coating process, it is typical to soak the cured resin layer at a given thickness in the liquid photocurable resin that is filled in a resin bath. Further, a relatively small amount of the photocurable resin may be deposited by a recoater all over the surface every time one cured resin layer is formed. After that, a laser beam traces a given pattern on the surface, thus curing a light-exposed part of the coating layer. The cured part is integrally laminated onto the cured layer below. Subsequently, the light exposure and the coating of liquid photocurable resin are repeated, with a cross-section treated in the light exposure process being changed with an adjacent cross-section, thereby forming a desired three-dimensional model (cf. Patent documents 1 and 2).

[Patent Document 1]
   Japanese Unexamined Patent Application Publication No. 56-144478
[Patent Document 2]
   Japanese Unexamined Patent Application Publication No. 62-35966

### Disclosure of Invention

### Technical Problem

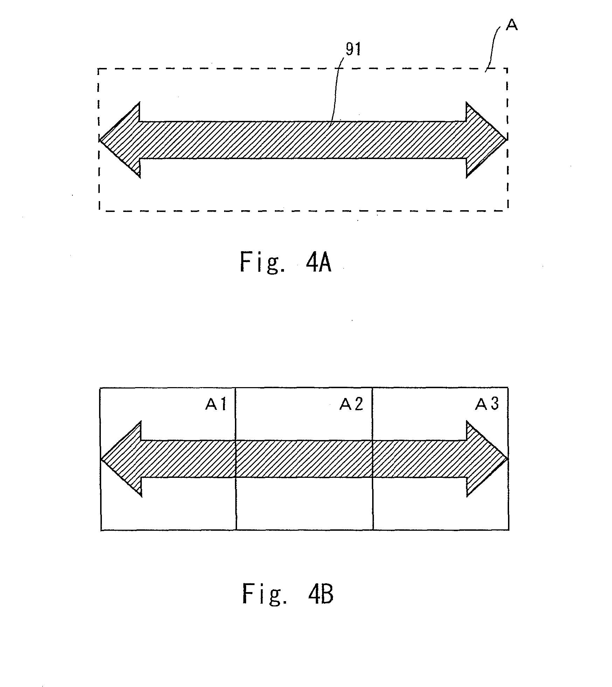

For the formation of a three-dimensional model with a desired shape using a stereolithography method, in addition to the technique that scans a surface with a light beam and applies a light beam only to a part which needs to be cured, there is a technique that repetitively performs one-shot exposure on a certain range of area (which is referred to hereinafter as a projection region). In the latter technique, a digital mirror device (DMD) is used, for example.
A case of forming an arrow shape 91 in a stereolithography region A as shown in Fig. 4A is described hereinafter. In such a case, the stereolithography region A is divided into projection regions A1, A2 and A3, which correspond to light exposure regions, as shown in Fig. 4B, and then exposure data is created for each of the projection regions.

According to the created exposure data, a stereolithography apparatus performs exposure in such a way that the projection regions are adjacent to each other with no space in between. Technically, such exposure allows the formation of a three-dimensional model in an integral form. Actually, however, flaking or cracking can occur at the boundaries between the projection regions or bumps and dips can be formed on an exposure surface or in the lamination direction, causing degradation of surface roughness and reduction of strength.

The present invention has been accomplished to solve the above problems and an object of the present invention is thus to provide a stereolithography method capable of accurately forming a three-dimensional model with a desired shape.

### Technical Solution

According to the present invention, there is provided a stereolithography method that forms a cured resin layer by selectively applying light to liquid photocurable resin and laminates cured resin layers on one another to create a three-dimensional model, wherein the light is applied by repeating one-shot exposure in each projection region, and the projection region includes an overlap region at a boundary between adjacent projection regions.

If the stereolithography method according to the present invention is used where an area of the projection region is 100 mm² or smaller, it is possible to form a three-dimensional model more accurately.
Likewise, if the stereolithography method according to the present invention is used where a thickness of one layer of the cured resin layers is 10 µm or smaller, it is possible to form a three-dimensional model more accurately.
It is preferred that an exposure amount in the overlap region is adjusted to be equal to an exposure amount in a region different from the overlap region.
Further, regarding an overlap region in a first projection region and a second projection region, it is preferred that an exposure amount in the overlap region in the first projection region decreases toward a center of the second projection region, and an exposure amount in the overlap region in the second projection region decreases toward a center of the first projection region.

Alternatively, regarding an overlap region in a first projection region and a second projection region, it is preferred that an exposure amount in the overlap region in the first projection region is substantially half an exposure amount in a region different from the overlap region, and an exposure amount in the overlap region in the second projection region is substantially half an exposure amount in a region different from the overlap region.
It is also preferred to stagger a position of the overlap region or alter a shape of the overlap region between adjacent cured resin layers.
The stereolithography method according to the present invention is suitable for use where the liquid photocurable resin is cured by light reflected by a digital mirror device.

### Advantageous Effects

The present invention can provide a stereolithography method capable of accurately forming a three-dimensional model with a desired shape.

### Brief Description of Drawings

[Fig. 1] A view showing the schematic structure of a stereolithography apparatus according to a first embodiment of the present invention.
[Fig. 2A] A view to describe a stereolithography method according to the first embodiment of the present invention.
[Fig. 2B] A view to describe a stereolithography method according to the first embodiment of the present invention.
[Fig. 2C] A view to describe a stereolithography method according to the first embodiment of the present invention.
[Fig. 3A] A view to describe a stereolithography method according to a second embodiment of the present invention.
[Fig. 3B] A view to describe a stereolithography method according to the second embodiment of the present invention.
[Fig. 3C] A view to describe a stereolithography method according to the second embodiment of the present invention.
[Fig. 4A] A view to describe a stereolithography method according to a related art.
[Fig. 4B] A view to describe a stereolithography method according to the related art.

### Explanation of Reference

- 1: Light source
- 2: DMD
- 3: Condenser lens
- 4: Stereolithography table
- 5: Dispenser
- 6: Recoater
- 7: Controller
- 8: Storage unit
- 9: Photocurable resin
- 10: Photocurable resin
- 100: Stereolithography apparatus

### Best Mode for Carrying Out the Invention

Embodiments of the present invention are described hereinafter. The following description merely explains some embodiments of the present invention, and the present invention is not limited to the following embodiments. The description hereinbelow is appropriately shortened and simplified to clarify the explanation. A person skilled in the art will be able to easily change, add, or modify various elements of the below-described embodiments without departing from the scope of the present invention.

### First Embodiment

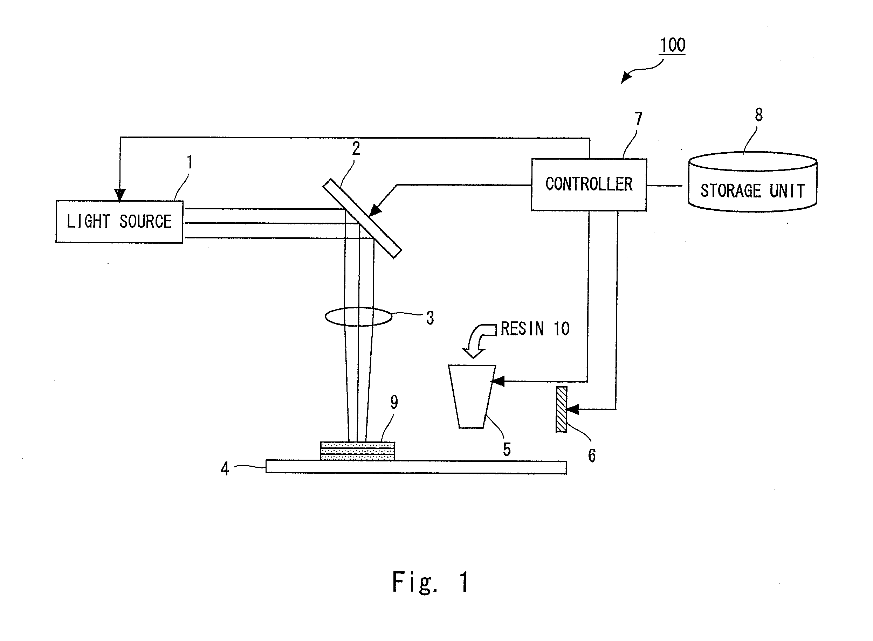

An example of a photo-curing stereolithography apparatus (which is referred to hereinafter as a stereolithography apparatus) that is used for a stereolithography method of the present invention is described hereinafter with reference to Fig. 1. A stereolithography apparatus 100 includes a light source 1, a digital mirror device (DMD) 2, a lens 3, a stereolithography table 4, a dispenser 5, a recoater 6, a controller 7, and a storage unit 8.

The light source 1 emits a laser beam. The light source 1 may be a laser diode (LD) or a ultraviolet (UV) lamp that emits laser light with a wavelength of 405 nm, for example.
The digital mirror device (DMD) 2 is a device that is developed by Texas Instruments, Inc., in which several hundreds of thousands to several millions of, e.g., 480 to 1310 thousands of, independently-driven micromirrors are arrayed on a CMOS semiconductor. Such micromirrors can be inclined at about ±10 degrees, e.g. ±12 degrees, around a diagonal line by the electrostatic field. Each microlens has a rectangular shape with one side of about 10 µm, e.g. 13.68 µm in length. An interval between adjacent micromirrors is 1 µm, for example. The DMD 2 that is used in the first embodiment has a rectangular shape of 40.8 × 31.8 mm as a whole (a mirror part has a rectangular shape of 14.0 × 10.5 mm), and it is composed of 786,432 micromirrors, one side of each having a length of 13.68 µm. The DMD 2 reflects a laser beam that is emitted from the light source 1 by each micromirror, so that only the laser light that is reflected by a micromirror that is controlled at a given angle by the controller 7 is applied to the photocurable resin 9 on the stereolithography table 4 through the condenser lens 3.
The lens 3 directs the laser beam that is reflected by the DMD 2 onto the photocurable resin 9 to form a projection region. The lens 3 may be a condenser lens using a convex lens, or a concave lens. The use of the concave lens allows formation of a projection region that is larger than an actual size of DSM. The lens 3 of the first embodiment is a condenser lens, which condenses the incident light at a magnification of about 15 times and focuses the light on the photocurable resin 9.
The stereolithography table 4 is a flat support on which cured resins are sequentially deposited and placed.
The stereolithography table 4 is horizontally and vertically movable by a driving mechanism, or a moving mechanism, which is not shown. The driving mechanism enables stereolithography over a desired range.
The dispenser 5 contains a photocurable resin 10 and supplies a predetermined amount of the photocurable resin 10 to a prescribed position.
The recoater 6 includes a blade mechanism and a moving mechanism, for example, and it evenly deposits the photocurable resin 10.

The controller 7 controls the light source 1, the DMD 2, the stereolithography table 4, the dispenser 5 and the recoater 6 according to control data that includes exposure data. Typically, the controller 7 may be realized by installing a given program onto a computer. A typical computer configuration includes a central processing unit (CPU) and a memory. The CPU and the memory are connected to an external storage device, such as a hard disk device as an auxiliary storage device, through a bus. The external storage device serves as the storage unit 8 of the controller 7. A storage medium driving device, such as a flexible disk device, a hard disk device, or a CD-ROM drive, is connected to the bus through a controller of each type. A portable storage medium, such as a flexible disk, is inserted to the storage medium driving device such as a flexible disk device. The storage medium may store a given computer program that gives a command to a CPU or the like in cooperation with an operating system to implement the present embodiment.
The storage unit 8 stores control data that includes exposure data of cross-sections that are obtained by slicing a three-dimensional model to be formed into a plurality of layers. The controller 7 mainly controls the angle of each micromirror in the DMD 2 and the movement of the stereolithography table 4 (i.e. the position of the laser beam exposure range on a three-dimensional model) based on the exposure data that is stored in the storage unit 8, thus executing the formation of a three-dimensional model.

A computer program is executed by being loaded to a memory. The computer program may be stored in a storage medium by being compressed or divided into a plurality of pieces. Further, a user interface hardware may be provided. The user interface hardware may be a pointing device for input such as a mouse, a keyboard, a display for presenting visual data to a user, or the like.
The photocurable resin 10 may be a resin that is cured by visible light and light outside the visible light spectrum. For example, an acrylic resin with a cure depth of 15 µm or above (500 mJ/cm²) and a viscosity of 1500 to 2500 Pa·s (25°C), which is responsive to a wavelength of 405 nm, may be used.

Stereolithography operation of the stereolithography apparatus 100 according to the first embodiment is described hereinafter. Firstly, the photocurable resin 10 in a non-cured state is poured into the dispenser 5. The stereolithography table 4 is located at an initial position. The dispenser 5 supplies a predetermined amount of the photocurable resin 10 onto the stereolithography table 4.
The recoater 6 sweeps to spread the photocurable resin 10, thereby forming one coating layer to be cured.
A laser beam that is emitted from the light source 1 is incident on the DMD 2. The DMD 2 is controlled by the controller 7 according to the exposure data that is stored in the storage unit 8 so as to adjust the angle of a micromirror that corresponds to a part of the photocurable resin 10 which is to be exposed to a laser beam. A laser beam that is reflected by the relevant micromirror is thereby applied to the photocurable resin 10 through the condenser lens 3, and laser beams that are reflected by other micromirrors are not applied to the photocurable resin 10. The application of a laser beam to the photocurable resin 10 may be performed for 0.4 seconds, for example. A projection region on the photocurable resin 10 is about 1.3 × 1.8 mm, for example, and it may be reduced to about 0.6 × 0.9 mm. In general, the area of the projection region is preferably 100 mm² or smaller.
With the use of a concave lens as the lens 3, a projection region may be enlarged to about 6 × 9 cm. If a projection region is enlarged to be larger than this size, the energy density of a laser beam that is applied to the projection region decreases, which can cause insufficient curing of the photocurable resin 10. When forming a three-dimensional model that is larger than the size of a projection region of a laser beam, it is necessary to move the exposure position of a laser beam by horizontally moving the stereolithography table 4 using a moving mechanism, for example, so as to apply a laser beam all over the stereolithography area. A laser beam is applied one shot at a time in each projection region. The control of laser beam exposure to each projection region is described in detail later.
In this way, the laser beam application, or the exposure, is performed in each projection region, with the projection regions switched to one another, to cure the photocurable resin 10, thereby forming a first cured resin layer. The lamination pitch of one layer, which is the thickness of a single cured resin layer, may be, for example, 1 to 50 µm, preferably 2 to 10 µm, and more preferably 5 to 10 µm.

Next, a second layer of a three-dimensional model with a desired shape is formed in the same process. Specifically, the photocurable resin 10 that is supplied from the dispenser 5 is deposited with a uniform thickness on the outside of the cured resin layer which is formed as a first layer in such a way that it is spread to be larger than a three-dimensional model by the recoater 6. Then, a laser beam is applied so as to form a second cured resin layer on top of the first cured resin layer. After that, a third and subsequent cured resin layers are deposited sequentially in the same manner. When the deposition of a final layer is finished, a model that is formed on the stereolithography table 4 is taken out. The liquid photocurable resin that is attached to the surface of the model is removed by cleaning or the like, and, if necessary, the model may be further exposed to a UV lamp or the like or heated to thereby promote the curing.

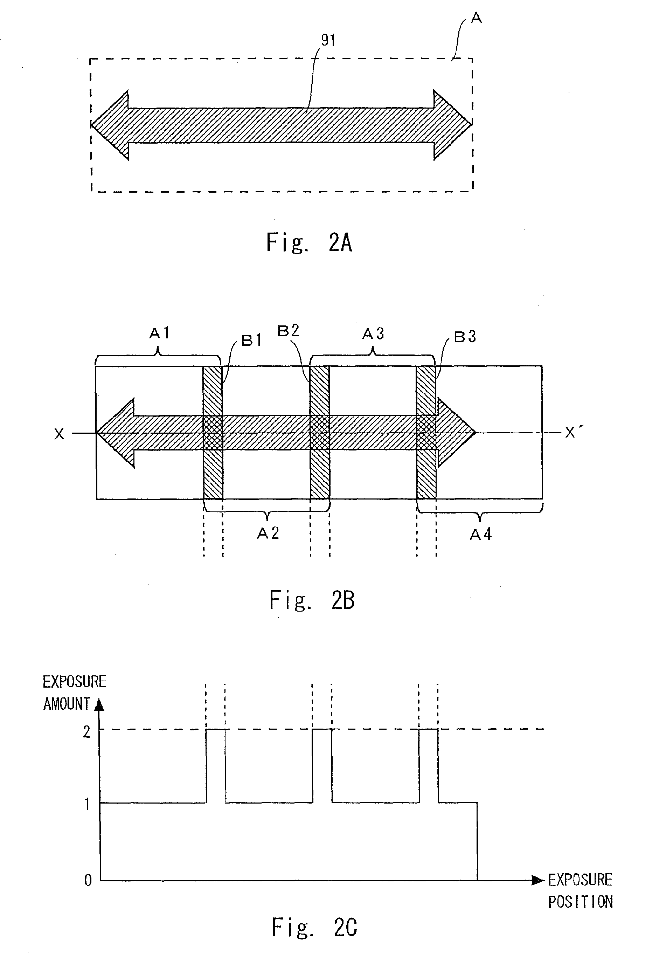

Referring now to Figs. 2A to 2C, a stereolithography method according to the first embodiment is described hereinafter in further detail. Fig. 2A is a top view showing the shape of a three-dimensional model to be formed. Fig. 2B is a view showing the positional relationship between a plurality of projection regions and a three-dimensional model. Fig. 2C is a graph showing the exposure amount at each position on X-X' in Fig. 2B. The dotted lines that extend downward in Fig. 2B are respectively connected with the dotted lines that extend upward in Fig. 2C.
In this example, a case of forming a three-dimensional model with an arrow shape when viewed from the top is described as shown in Fig. 2A. In Fig. 2A, A indicates a stereolithography region that includes the three-dimensional model. According to a related art, the stereolithography region A is divided simply into projection regions which correspond to a laser beam applicable range. A projection region is 1/3 the size of the stereolithography region A in this example. Although the stereolithography method of the related art divides the stereolithography region A into three sections in such a way that projection regions do not overlap with each other, the present embodiment performs exposure on each of four projection regions.

Specifically, this embodiment performs exposure on four projection regions A1, A2, A3 and A4 as shown in Fig. 2B.
The projection region A1 is an area of a light applicable range at the left end of the stereolithography region A. The projection region A2 is an area that is placed in such a way that its left end overlaps with the projection region A1. Thus, an overlap region B1 is formed at the boundary between the projection region A1 and the projection region A2. Likewise, the projection region A3 is placed in such a way that its left end overlaps with the projection region A2. Thus, an overlap region B2 is formed at the boundary between the projection region A2 and the projection region A3. Further, the projection region A4 is placed in such a way that its left end overlaps with the projection region A3. Thus, an overlap region B3 is formed at the boundary between the projection region A3 and the projection region A4.
The width of the overlap regions B1, B2 and B3 may be several µm to several hundreds of µm, for example.

In order to project a laser beam in such a way, it is necessary to create exposure data such that the exposure shape in each projection region is as illustrated in Fig. 2B. It is also necessary to create exposure data such that exposure position of a laser beam on a three-dimensional model moves so as to form the overlap regions B1, B2 and B3. It is thus needed to create the exposure data that causes a moving mechanism for moving a stereolithography table to move so as to form the overlap regions B1, B2 and B3.
If a laser beam is applied onto a photocurable resin as illustrated in Fig. 2B, the exposure amount in the overlap regions B1, B2 and B3 is larger than that in the other regions. In this example, the exposure amount in the overlap regions B1, B2 and B3 is about twice as large as the exposure amount in the other regions.

The stereolithography method according to the first embodiment performs exposure in such a way that there is an overlap region at the boundaries between the projection regions according to the exposure data that is created as described above. It is thereby possible to prevent the occurrence of flaking or cracking at the boundaries between the projection regions and the formation of bumps and dips on the exposure surface or in the lamination direction, thereby improving the surface roughness and strength and enabling the accurate formation of a three-dimensional model with a desired shape.

### Second Embodiment

Because one shot of the exposure amount in each projection region is substantially the same in the first embodiment of the invention, the exposure amount in the overlap regions at the boundaries between the projection regions is larger than that in the other regions. Accordingly, the range of resin curing extends in the overlap regions, which can cause an excessive resin curing part.
Such an excessive resin curing part is one factor of warpage deformation with time. Particularly, the adverse effect of the uneven exposure amount is significant in the microstereolithography where one-shot exposure area is 250 mm² or smaller.
In light of this, the second embodiment of the invention adjusts the exposure amount in the overlap regions (a total amount of overlap exposure) in such a way that it is equal to the exposure amount in the regions different from the overlap regions, which is, an exposure energy density. Specifically, the exposure amount can be controlled in the same way as controlling the shading on a display screen, which is, by repetitively changing the angle of micromirrors in the DMD 2 at a certain frequency within one-time exposure period onto an exposure region to thereby adjust the exposure time of a laser beam from each micromirror. Because the present embodiment of the invention can control the exposure amount by the same control as when producing light and shade on a display screen in the DMD 2, it is possible to share the same data format, thus allowing the use of a bitmap format, which is a general screen display format, for example.

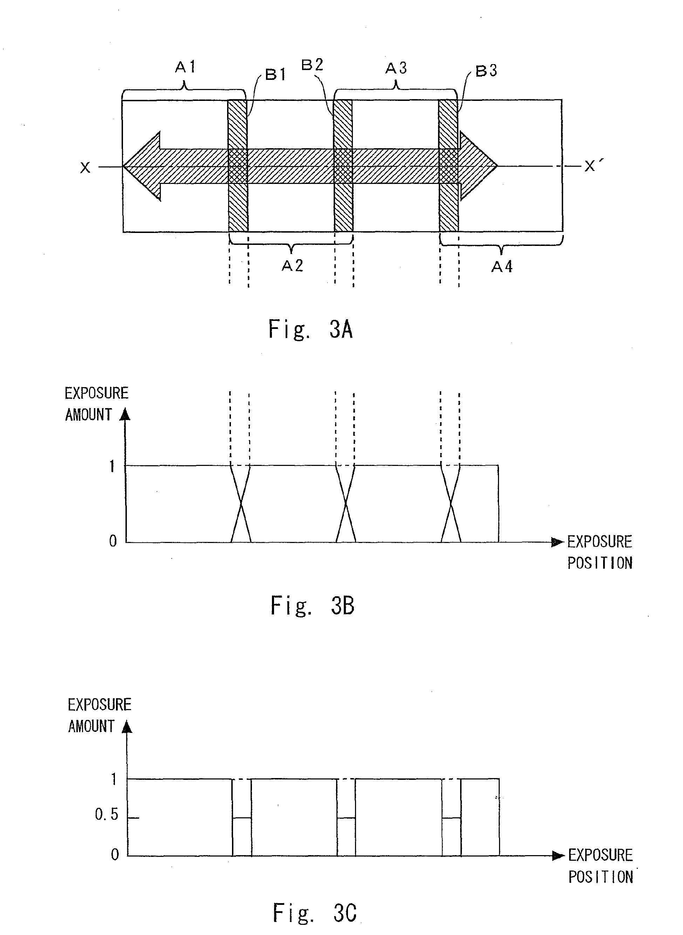

Fig. 3A is the same view as Fig. 2B, and it is referred to for indicating the exposure positions in Figs. 3B and 3C. The dotted lines that extend downward in Fig. 3A are respectively connected with the dotted lines that extend upward in Fig. 3B. As shown in Fig. 3B, the exposure amount in the overlap region B1 in the projection region A1 gradually decreases toward the projection region A2. Thus, the exposure amount in the overlap region B1 in the projection region A1 decreases in direct proportion to the distance to the end of the projection region A1 on the side of the projection region A2. On the other hand, the exposure amount in the overlap region B1 in the projection region A2 gradually decreases toward the projection region A1. Thus, the exposure amount in the overlap region B1 in the projection region A2 decreases in direct proportion to the distance to the end of the projection region A2 on the side of the projection region A1. More specifically, because the exposure amount can be controlled by the same control as when producing shading on a display screen for each of regions that are exposed to a laser beam from each micromirror, the exposure amount in the overlap region B1 shown in Fig. 3B does not, to be exact, change in a continuous fashion relative to the exposure position but changes in a step-by-step fashion according to the number of micromirrors for the exposure position in the overlap region B1. The exposure amount in the overlap region B1 is basically a sum of the exposure amount in the projection region A1 and the exposure amount in the projection region A2. When the exposure amount in the other regions is 1, the exposure amount in the overlap region B1 is 1, which is the same as the exposure amount in the other regions. However, the exposure amount in the overlap region is not necessarily exactly the same as the exposure amount in the other regions, and it is preferred to adjust the exposure amount as appropriate according to a photocurable resin or a light source for exposure that are used.

Like the overlap region B1, the exposure amount in the overlap regions B2 and B3 is also controlled to be 1, which is the same as the exposure amount in the other regions. Accordingly, the exposure amount in the laser beam exposure area, which includes the overlap regions B1, B2 and B3, is equal, thus remaining uniform.
Therefore, the stereolithography method of the second embodiment prevents the occurrence of an excessive resin curing part and enables the accurate formation of a three-dimensional model with a desired shape.
Particularly, if the exposure amount is adjusted as shown in Fig. 3B, a change in the exposure amount is gradual and there is no abrupt change in exposure amount. Thus, uneven curing is not likely to occur even if displacement occurs in a projection region.
A decrease or increase in the exposure amount in the overlap regions may be represented by linear expression or by quadratic or higher order expression.

The exposure amount may be adjusted as shown in Fig. 3C. Specifically, the exposure amount in the overlap region B1 in the projection region A1 is controlled to be 0.5, which is half the amount in the other regions, and the exposure amount in the overlap region B1 in the projection region A2 is also controlled to 0.5. Accordingly, the exposure amount in the overlap region B1, which is basically a sum of the exposure amount in the projection region A1 and the exposure amount in the projection region A2, is 1, thus being the same as the exposure amount in the other regions. Like the overlap region B1, the exposure amount in the overlap regions B2 and B3 is also controlled to be 1, which is the same as the exposure amount in the other regions. Accordingly, the exposure amount in the part where a three-dimensional model exists, which includes the overlap regions B1, B2 and B3, is equal, thus remaining uniform. It is thereby possible to prevent the occurrence of an excessive resin curing part and enable the accurate formation of a three-dimensional model with a desired shape in this case also.

### Other Embodiment

Although the overlap regions are formed at the boundaries between the adjacent projection regions in the above embodiments, a stereolithography apparatus may be provided with a function for switching between a mode of forming an overlap region and a mode of not forming an overlap region.
Although the projections regions are arranged in one row in the above embodiments, they may be arranged two dimensionally in a vertical and horizontal array, in which case also overlap regions may be formed at the boundaries between the adjacent projection regions. In such a case, the overlap regions are formed at four surrounding positions because there are adjacent projection regions in four directions on the upper, lower, left and right sides.
Further, although a DMD is used as a device for modulating a light beam emitted from a light source in the above embodiments, the present invention is not limited thereto, and a liquid crystal device capable of adjusting the amount of light passing therethrough for each of minute regions, which is pixels, may be used instead. However, the DMD is more preferable than the liquid crystal device in terms of contrast.
Furthermore, although only one layer is described in the above embodiments, it is preferred to form overlap regions in each of a plurality of layers that are used for forming a three-dimensional mode. The position of the overlap regions may be staggered in adjacent layers.
Further, the shape of the overlap regions may be different between adjacent layers.

### Industrial Applicability

The stereolithography method according to the present invention can be used in manufacture of microreactors, micromachine parts, micro-optical devices, microsensors, optical elements and so on.

## Claims

1. A stereolithography method that forms a cured resin layer by selectively applying light to liquid photocurable resin and laminates cured resin layers on one another to create a three-dimensional model, wherein
the light is applied by repeating one-shot exposure in each projection region, and
the projection region includes an overlap region at a boundary between adjacent projection regions.

2. The stereolithography method according to claim 1, wherein an area of the projection region is 100 mm² or smaller.

3. The stereolithography method according to claim 1, wherein a thickness of one layer of the cured resin layers is 10 µm or smaller.

4. The stereolithography method according to claim 1, wherein an exposure amount in the overlap region is adjusted to be equal to an exposure amount in a region different from the overlap region.

5. The stereolithography method according to claim 1, wherein, regarding an overlap region in a first projection region and a second projection region, an exposure amount in the overlap region in the first projection region decreases toward a center of the second projection region, and an exposure amount in the overlap region in the second projection region decreases toward a center of the first projection region.

6. The stereolithography method according to claim 1, wherein, regarding an overlap region in a first projection region and a second projection region, an exposure amount in the overlap region in the first projection region is substantially half an exposure amount in a region different from the overlap region, and an exposure amount in the overlap region in the second projection region is substantially half an exposure amount in a region different from the overlap region.

7. The stereolithography method according to claim 1, wherein a position of the overlap region is staggered between adjacent cured resin layers.

8. The stereolithography method according to claim 1, wherein a shape of the overlap region is different between adjacent cured resin layers.

9. The stereolithography method according to claim 1, wherein the liquid photocurable resin is cured by light reflected by a digital mirror device.
